# EUROPÄISCHE PATENTSCHRIFT

(11) **EP 1 218 122 B1**
(45) Veröffentlichungstag und Bekanntmachung des Hinweises auf die Patenterteilung: **07.05.2003**
(21) Anmeldenummer: 00967831.9
(22) Anmeldetag: 29.09.2000
(51) Int. Cl.: B21D 3/05

(54) **RICHTMASCHINE ZUM RICHTEN LANGGESTRECKTER KÖRPER**
STRAIGHTENING MACHINE FOR STRAIGHTENING ELONGATED BODIES
DRESSEUSE SERVANT A DRESSER DES CORPS ALLONGES

(30) Priorität: 02.10.1999 DE 29917408 U
(43) Veröffentlichungstag der Anmeldung: 03.07.2002
(73) Patentinhaber: Friatec Aktiengesellschaft, 68229 Mannheim (DE)
(72) Erfinder: SCHRAMM, Alexander, 68647 Biblis (DE); SICHLER, Bernhard, 69517 Gorxheimertal (DE); LUZ, Oliver, 68163 Mannheim (DE)
(74) Vertreter: Schmitt, Meinrad, Dipl.-Ing.
(86) Internationale Anmeldenummer: EP0009570
(87) Internationale Veröffentlichungsnummer: WO01024953

(56) Entgegenhaltungen:
- WO-A-91/17003
- US-A- 2 071 154
- US-A- 2 642 115

## Beschreibung

Die Erfindung bezieht sich auf eine Biegemaschine zum Richten langgestreckter Körper, insbesondere Rohre, Kunststoffverbundrohre, Stangen oder Profile, gemäß den im Oberbegriff des Patentanspruchs 1 angegebenen Merkmalen.

Aus der DE-A1-197 50 816 ist eine derartige Biegemaschine bekannt, welche zum Richten eines Walzprofils ausgebildet ist. Die Biegemaschine enthält eine Anzahl von Richtrollen, welche einen Richtkanal bilden und welche auf die Oberfläche des in den Richtkanal eingeführten Walzprofils bzw. langgestreckten Körpers einwirken. Ferner ist ein Anstellelement mit einer anstellbaren Auslaufrolle zum Führen des gerichteten Walzprofils vorgesehen, wobei mittels einer Sensoreinrichtung und eines Anstellreglers das Anstellelement einstellbar ist. Die Biegemaschine ist eine komplexe, stationäre Anlageneinheit, welche in Walzwerken zum Einsatz gelangt und für den insbesondere mobilen Einsatz auf Baustellen oder in Werkstätten oder in Handwerksbetrieben nicht geeignet ist.

Ferner ist aus der DE-C2-35 34 428 eine Biegemaschine für Rohre, Profile und dergleichen bekannt, welche ausgehend von einer linearen, geraden Ausrichtung mit Biegungen und Krümmungen enger Biegeradien ausgebildet ist. Diese Biegemaschine enthält einerseits Vorschubrollen, zwischen welchen das Rohr oder dergleichen in einer vorgegebenen ersten Richtung vorschiebbar ist, und andererseits Biegerollen, welche auf einem zur ersten Richtung rechtwinklig verschiebbaren Schlitten angeordnet sind. Die Biegemaschine bildet zwar eine kompakte und ggf. manuell transportierbare Baueinheit, doch können Rohre, Profile und dergleichen, welche gekrümmt oder im gebogenen Zustand bereitgestellt werden, zur weiteren Verarbeitung nicht ohne weiteres gerade ausgerichtet werden. Die Vorschubrollen sind paarweise, diametral unter Berücksichtigung des Durchmessers bzw. der Außenkontur des langgestreckten Körpers angeordnet, so daß für andere Durchmesser oder Außenkonturen die genannten Rollen gegen andere dementsprechend ausgebildete Rollen ausgewechselt werden müssen. Dies ist äußerst zeitaufwendig und für den rauhen Baustellenbetrieb ungeeignet. Außerdem müssen verschiedene Rollensätze auf Lager bereitgehalten werden. Ein weiterer wesentlicher Nachteil besteht darin, daß die Rollen von außen zugänglich sind, womit eine Unfallgefahr verbunden ist.

Langgestreckte Körper wie Rohre, Stangen oder Profile werden heute oftmals auf Rollen bereitgestellt, deren Durchmesser entsprechend der Flexibilität der langgestreckten Körper regelmäßig in der Größenordnung von 1 bis 2 m liegt. Nach dem Abrollen des langgestreckten Körpers weist dieser einen entsprechenden Krümmungsradius auf, so daß eine korrekte gerade Verlegung in der Praxis nicht durchführbar ist. Insbesondere in der Installationstechnik zur Verlegung von Wasserrohren, insbesondere für eine Aufputzinstallation, aber auch für eine Unterputzinstallation, sind selbst leichte Krümmungen unerwünscht. Vergleichbare Schwierigkeiten ergeben sich beim Verlegen oder der Montage von Stangen oder Profilen wie beispielsweise für Kabelkanäle, Verkleidungen, Gerüste oder dergleichen.

Der Erfindung liegt die Aufgabe zugrunde, eine Biegemaschine der genannten Art mit einem geringen konstruktiven Aufwand dahingehend auszubilden, daß die Einstellung für unterschiedliche Durchmesser oder Außenkonturen der langgestreckten Körper in einfacher Weise ermöglicht wird und besondere Umbauarbeiten vermieden werden. Die Biegemaschine soll eine einfache Handhabung ermöglichen und einen geringen Material- und Fertigungsaufwand erfordern.

Die Lösung dieser Aufgabe erfolgt gemäß den im Patentanspruch 1 angegebenen Merkmalen.

Die erfindungsgemäße Biegemaschine zeichnet sich durch eine einfache Konstruktion aus und ermöglicht problemlos die Einstellung auf unterschiedliche Durchmesser oder Außenkonturen des zu richtenden langgestreckten Körpers. Entlang dem Richtkanal ist eine Anzahl von Richtrollen auf radial verschiebbaren Trägern angeordnet, welche gemeinsam mittels einer Verschiebeplatte verstellbar sind. Zweckmäßig sind jeweils zwei Träger diametral angeordnet, welche wenigstens zwei diametral angeordnete Richtrollen enthalten. In einer besonderen Ausgestaltung sind vier bezüglich des Richtkanals bzw. der Längsachse jeweils um zumindest näherungsweise 90° gegeneinander versetzt angeordnete Träger vorgesehen, wobei die jeweils diametral angeordneten Träger wenigstens ein diametrales Rollenpaar aufweisen. Die genannten Träger sind in einer besonderen Ausgestaltung im Maschinengestell radial verschiebbar gelagert, wobei mittels der Verstellscheibe die radiale Position der Träger und somit der jeweiligen Richtrollen bezüglich der Längsachse durch Drehen der Verschiebeplatte vorgegeben wird. Alternativ können die Träger im Maschinengestell zum einen um ein festes Schwenklager schwenkbar gelagert sein und zum anderen mittels eines durch die Verschiebeplatte gebildeten losen Lagers in der erforderlichen Weise radial verstellbar gelagert sein.

Die Verschiebeplatte und die jeweiligen Träger weisen miteinander korrespondierende Führungselemente auf, welche insbesondere als ein Bolzen und eine korrespondierende Führungsnut ausgebildet sind, wobei der Bolzen dem Träger und die Führungsnut der Verschiebeplatte zugeordnet sind oder umgekehrt. Die genannte Verschiebeplatte ist im Maschinengestell um die Längsachse des Richtkanals drehbar gelagert, wobei entsprechend der Drehstellung der Verschiebeplatte die radiale Einstellung der Träger und somit der den Richtkanal begrenzenden Richtrollen vorgegeben ist. Die Biegemaschine ist eine kompakte, bevorzugt tragbare Baueinheit, mit einem Gesamtgewicht von wenigen Kilogramm und kann problemlos, insbesondere von einer Person, zu dem gewünschten Einsatzort transportiert werden.

Vorteilhaft sind zwei Verschiebeplatten jeweils an den axialen Enden der genannten Träger angeordnet, wodurch eine sichere Lagerung der Träger samt Richtrollen im Maschinengestell gewährleistet ist. Mit der oder den beiden Verschiebeplatten ist in vorteilhafter Weise ein Einstellhandgriff verbunden, mittels welchem in einfacher Weise die synchrone Drehung der Verschiebeplatte(n) um die Längsachse durchführbar ist. Desweiteren sind der wenigstens einen Platte Einstellmarken derart zugeordnet, daß die momentane Stellung und letztendlich der eingestellte Abstand der Richtrollen zur Längsachse und somit der eingestellte Rohrdurchmesser von einer Bedienungsperson ohne weiteres feststellbar ist.

Das Maschinengestell, welches in vorteilhafter Weise an seinen beiden Enden jeweils eine Führungsplatte aufweist, besitzt an beiden Enden jeweils eine Öffnung zum Einführen bzw. Herausführen des langgestreckten Körpers, wobei zwischen den genannten Öffnungen sich der Richtkanal und die Richtrollen befinden. Die Richtrollen sind in vorteilhafter Weise radial innenliegend am jeweiligen Träger angeordnet und somit vor unerwünschten Zugriffen geschützt, so daß eine Unfallgefährdung für das Bedienungspersonal ausgeschlossen ist.

In einer besonderen Weiterbildung enthält die Biegemaschine eine Schneideinrichtung zum Abschneiden des langgestreckten Körpers auf ein gewünschtes Maß. So können vor allem Rohre, insbesondere Kunststoffverbundrohre, auf die zur Weiterverarbeitung erforderliche Länge abgeschnitten werden. Durch die erfindunsgemäße Integration der Schneideinrichtung in die Biegemaschine besitzt letztere somit eine Doppelfunktion, wodurch mit geringem Zeitaufwand die Bereitstellung von gerade gerichteten und auf die gewünschte Länge geschnittener langgestreckter Körper erreicht wird.

Besondere Ausgestaltungen und Weiterbildungen sind in den Unteransprüchen angegeben.

Die Erfindung wird nachfolgend anhand eines in den Zeichnungen dargestellten Ausführungsbeispiels näher erläutert, ohne daß insoweit eine Einschränkung erfolgt. Es zeigen:
- Fig.1: eine perspektivische Darstellung der Biegemaschine nach der Erfindung,
- Fig. 2: einen Längsschnitt durch die Biegemaschine in der Schnittebene II gemäß Fig. 1,
- Fig. 3: eine Teilansicht in Blickrichtung III gemäß Fig. 2,
- Fig. 4: eine perspektivische Darstellung in der Schnittebene II gemäß Fig. 1,
- Fig. 5: eine Ansicht einer Richtrolle.

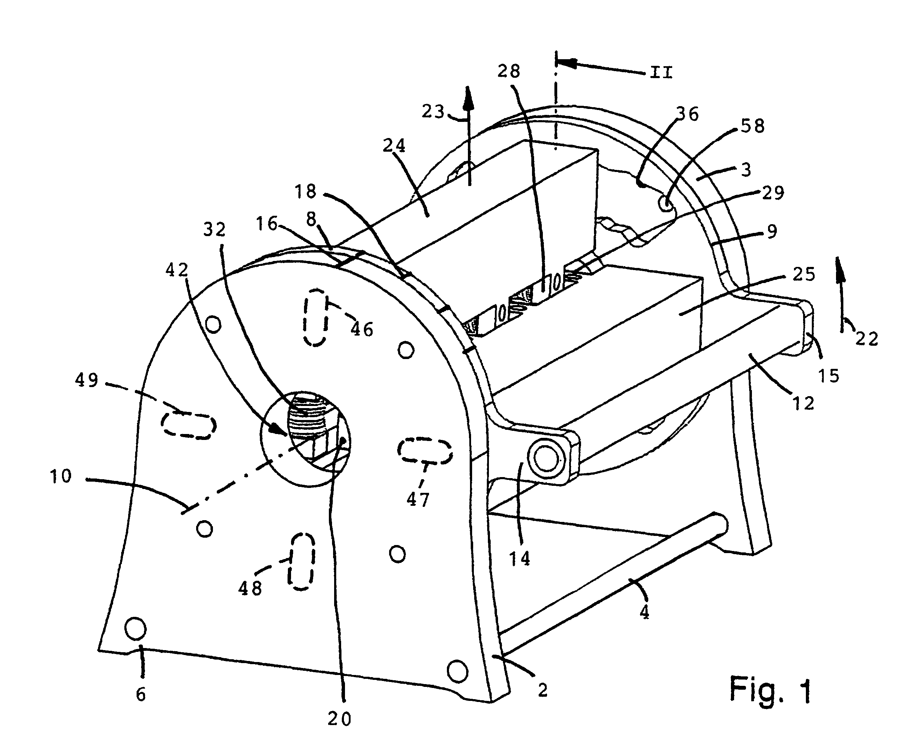

Fig. 1 zeigt in einer perspektivischen Darstellung die Biegemaschine mit einem Maschinengestell, enthaltend zwei Führungsplatten 2, 3, welche mittels Stangen 4 miteinander verbunden sind. Entsprechend der gemäß Zeichnung rechten Stange 4 ist im Bereich der unteren Enden 6 der Führungsplatten 2, 3 eine weitere Stange vorhanden. An den aneinander zugewandten Innenflächen der Führungsplatten 2, 3 sind zwei Verschiebeplatten 8, 9 um eine Längsachse 10 drehbar gelagert. Zur Drehung der Verschiebeplatten 8, 9 ist ein Einstellgriff 12 vorgesehen, welcher an radial nach außen vorstehenden Nocken 14, 15 der Verschiebeplatten 8, 9 befestigt ist. Die Führungsplatte 2 weist eine Einstellmarke 16 auf, welcher auf der Außenfläche der Verschiebeplatte 8 Markierungen zugeordnet sind. Die Markierungen 18 beziehen sich auf unterschiedliche Durchmesser eines zur Längsachse 10 koaxialen Richtkanals 20, welcher mittels nachfolgend noch zu erläuternden Richtrollen vorgebbar ist. Entsprechend dem durch Drehen der Verschiebeplatten 8, 9 um die Längsachse 10 im Durchmesser eingestellten Richtkanal können langgestreckte Körper, wie insbesondere Rohre oder Kunststoffverbundrohre unterschiedlichen Durchmessers, mit der Biegemaschine gerade gerichtet werden, wobei durch Drehen der Verschiebeplatten 8, 9 in Richtung des Pfeiles 22 die dem jeweiligen Durchmesser entsprechende Markierung 18 auf die Einstellmarke 16 ausgerichtet wird.

Zwischen den Verschiebeplatten 8, 9 sind vier Träger im wesentlichen parallel zur Längsachse 10 angeordnet, wobei in der Zeichnung die beiden Träger 24, 25 zu erkennen sind, welche bezüglich der Längsachse 10 um 90° zueinander versetzt angeordnet sind. Diametral zum gemäß Zeichnung oberen Träger 24 ist unterhalb desselben ein dritter Träger angeordnet und diametral zum Träger 25 ist der vierte Träger angeordnet. Die Träger 24, 25, entsprechendes gilt für die beiden anderen Träger, enthalten Lagerböcke 28, 29 für die bereits erwähnten Richtrollen, wobei in der Zeichnung lediglich die eine Richtrolle 32 des zum vorderen Träger 25 diametral angeordneten hinteren Trägers zu erkennen ist.

Die Verschiebeplatten 8, 9 enthalten erste Verstellelemente, welchen zweite Verstellelemente der jeweiligen Träger 24, 25 zugeordnet sind. Gemäß Zeichnung ist das erste Verstellelement 36 als eine bezüglich der Längsachse 10 spiralförmige Nut ausgebildet, in welche das hier nicht sichtbare zweite Verstellelement des Trägers 24 in Form eines Bolzens eingreift. Die genannten Verstellelemente bzw. die spiralförmige Nut 36 und der in diese eingreifende Bolzen sind derart ausgebildet, daß durch Drehen der Verschiebeplatten 8, 9 entsprechend dem Pfeil 22 der Träger 24 radial in Richtung des Pfeiles 23 nach außen verschoben wird. Es versteht sich, daß bei Drehung entgegen der Richtung des Pfeiles 22 der Träger 24 radial nach innen verschoben wird. Des weiteren sei festgehalten, daß die Verstellelemente entsprechend am anderen axialen Ende des Trägers 24 und der dort angeordneten Verschiebeplatte 8 ausgebildet sind und daß ferner die drei weiteren Träger in analoger Weise mittels Verstellelementen radial verstellbar sind. Entscheidend ist, daß durch Drehen der beiden Verschiebeplatten 8, 9, welche über den Einstellgriff 12 miteinander gekoppelt sind, eine gemeinsame synchrone Verschiebung sämtlicher Träger radial nach außen oder radial nach innen erfolgt, so daß die Richtrollen sämtlicher Träger zur Längsachse 10 entsprechend der Drehstellung der Verschiebeplatten 8, 9 sämtlich übereinstimmende radiale Abstände aufweisen. Die Führungsplatte 2 enthält eine Öffnung 42, deren Durchmesser gleich oder größer ist als der Außendurchmesser des mittels der Biegemaschine zu richtenden Körpers bzw. Rohres, Stange oder dergleichen. Auch die gegenüberliegende Führungsplatte 3 enthält eine entsprechende zur Längsachse 10 koaxiale Öffnung. Die Durchmesser bzw. bei Profilen oder Stangen mit anderen Außenkonturen sind die Weiten der genannten Öffnungen nicht wesentlich größer als die maximalen Durchmesser bzw. maximalen Weiten der Außenkonturen, so daß eine Unfallgefährdung des Bedienungspersonals beim Einführen eines Körpers bzw. Rohres in die Öffnung mit hoher Sicherheit vermieden wird. Da die Richtrollen mittels der radial außen angeordneten Träger abgeschirmt sind, wird auch insoweit eine Gefährdung des Bedienungspersonals vermieden.

Die Führungsplatte 2 enthält auf ihrer den Trägern 24, 25 zugewandten Innenseite vier radiale Führungsnuten 46 bis 49, in welche Bolzen der jeweiligen Träger eingreifen. Zweckmäßig weist jeder Träger zwei radial beabstandete Bolzen auf und die Breite der Führungsnuten 46 bis 49 ist im wesentlichen gleich groß wie der Durchmesser der genannten Bolzen. Die radiale Länge der Führungsnuten 46 bis 49 ist unter Berücksichtigung der Bolzendurchmesser auf den radialen Verschiebeweg der Träger abgestimmt. Somit ist eine funktionssichere Lagerung und radiale Führung der Träger im Maschinengestell gewährleistet. An Stelle der beiden pro Träger vorgesehenen im wesentlichen zylindrischen Bolzen kann jeder Träger einen langgestreckten Führungskörper ähnlich einer Paßfeder aufweisen, welche in die zugeordnete Führungsnut eingreift, deren radiale Länge unter Berücksichtigung des radialen Verschiebungsweges des Trägers vorgegeben ist. Es sei darauf hingewiesen, daß nicht nur die gemäß Zeichnung vordere Führungsplatte 2, sondern gleichermaßen die andere Führungsplatte 3 entsprechende Führungsnuten aufweist. Alternativ können die erfindungsgemäßen radialen Führungselemente derart ausgebildet sein, daß Bolen auf den Führungsplatten 2, 3 angeordnet sind und die Träger korrespondierende radiale Führungsnuten enthalten. Die Führungsplatte 3 enthält ferner einen axialen Stellstift 58, der weiter unten noch zu erläutern ist.

Obgleich die Anordnung von vier bezüglich der Längsachse jeweils um 90° versetzt angeordneten Trägern sich als besonders zweckmäßig erwiesen hat, kann im Rahmen der Erfindung auch eine andere Anzahl von Trägern vorgesehen sein. Zweckmäßig werden wenigstens drei Träger angeordnet. Erfindungsgemäß sind die Träger um die Längsachse symmetrisch jeweils um die gleiche Winkel versetzt zueinander angeordnet.

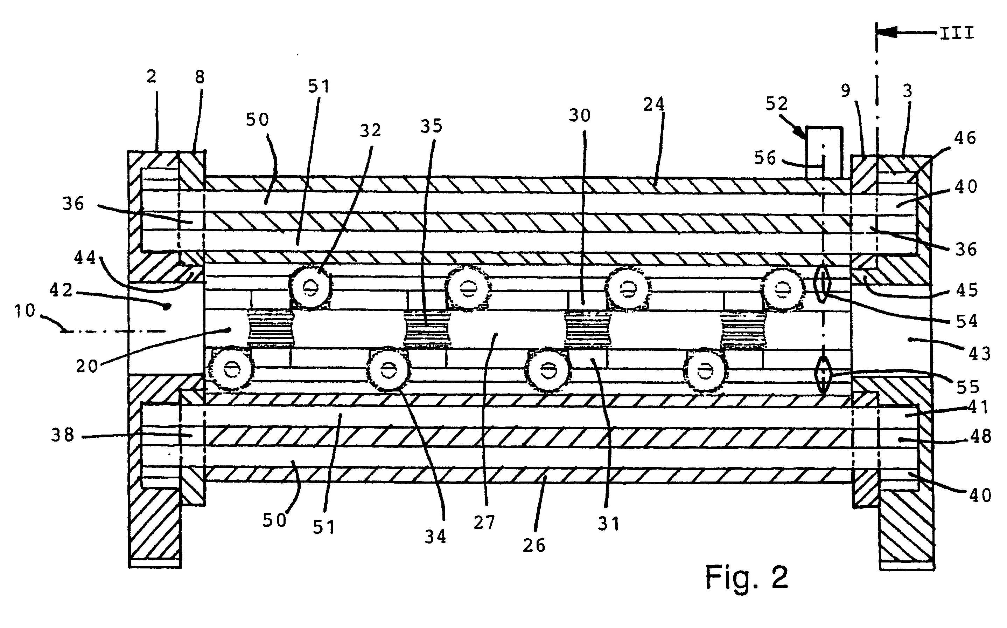

Fig. 2 zeigt einen Schnitt durch die Biegeschiene in einer axialen Schnittebene mit den beiden axial beabstandeten, außenliegenden Führungsplatten 2, 3 und der hinteren Verbindungsstange 5 des Maschienengestells. Die Führungsplatten 2, 3 enthalten erfindungsgemäß zur Längsachse 10 koaxiale Lager- oder Führungsflächen für die zugeordnete Verschiebeplatten 8, 9. Hierfür sind vorzugsweise im Bereich der einander zugewandten Innenflächen der Führungsplatten 2, 3 axiale Ansätze 44, 45 mit zur Längsachse 10 koaxialen Außenflächen vorgesehen, auf welchen die beiden Verschiebeplatten 8, 9 drehbar gelagert sind. In die ersten als Spiralnuten ausgebildeten Verstellelemente 36, 38 der Verschiebeplatten 8, 9 greifen die erwähnten zweiten Verstellelement in Form der oben erwähnten, axial ausgerichteten Bolzen 40, 41 des gemäß Zeichnung oberen bzw. unteren Trägers 24 bzw. 26 ein. Ferner enthalten die Verschiebeplatten 2, 3 die radialen Führungsnuten 46, 47, in welche die zweiten Verstelleiemente bzw. Bolzen 40, 41 gleichfalls eingreifen. Die Bolzen 40, 41 sind Bestandteile von Stangen 50, 51, deren axiale Länge größer ist als die axiale Länge der Träger 24, 26. Der jeweilige Träger 24, 26, entsprechendes gilt für die hinter bzw. vor der Zeichenebene liegenden Träger, werden jeweils axial von zwei dieser Stangen 50, 51 durchdrungen. Die radialen Führungsnuten 46, 48 dienen zur radialen Führung und Drehsicherung der jeweiligen Träger beim Drehen der Verschiebeplatten 8, 9 zum Anstellen der Richtrollen 32, 34, 35 des jeweiligen Trägers. Wie ersichtlich, enthalten die genannten Träger jeweils vier axial beabstandete Richtrollen. Die verschiedenen Richtrollen der einzelnen Träger sind axial versetzt zueinander angeordnet. Pro Träger sind die jeweiligen Richtrollen äquidistant zueinander angeordnet. Der hinter der Zeichenebene liegende Träger 27 weist zwei Lagerböcke 30, 31 zur drehbaren Lagerung der zwischen den Lagerböcken 30, 31 liegenden Richtrolle 35. Es versteht sich, daß die Richtrollen der drei anderen Träger in übereinstimmender Weise angeordnet und gelagert sind.

Die Biegemaschine enthält ferner eine Schneideinrichtung 52 mit Schneidrollen 54, 55. Diese Schneidrollen sind mittels der Schneideinrichtung 52 in radialer Richtung derart verstellbar, daß ihr Abstand bei Bedarf verkleinert werden kann, um den in der Biegemaschine befindlichen Körper bzw. das Rohr abzuschneiden. Hierzu enthält die Schneideinrichtung 52 eine gemäß strichpunktierter Linie 56 angedeuteter Spindel, welche außerhalb des Richtkanals angeordnet ist und mittels welcher die Schneidrollen 54, 55 radial in der gewünschten Weise verstellbar sind. Während des Richtvorganges sind die beiden Schneidrollen 54, 55 derart eingestellt, daß sie die Außenfläche des Körpers bzw. Rohres nicht berühren. Durch Anstellen der Schneidrollen 54, 55 auf die Außenfläche des Körpers bzw. Rohres und sukzessives Nachstellen zwecks Verringerung des radialen Anstandes der Schneidrollen 54, 55 und durch Drehen des Körpers bzw. Rohres um die Längsachse 10 erfolgt das Abschneiden.

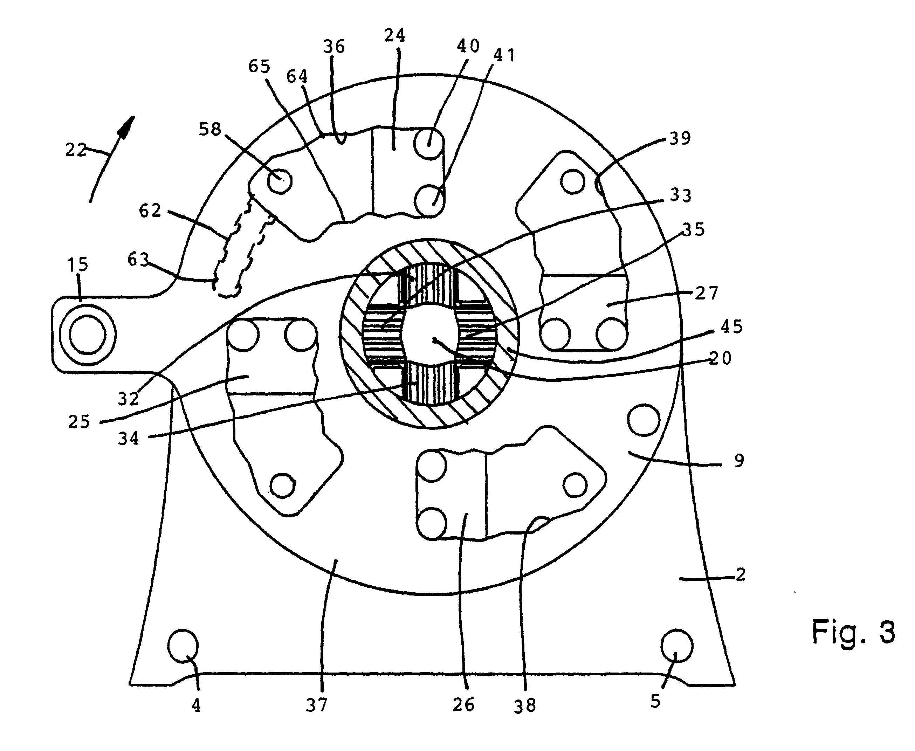

Fig. 3 zeigt in einer axialen Ansicht teilweise die Biegemaschine, und zwar in der Schnittebene III gemäß Fig. 2. Die auf dem axialen Ansatz 45 drehbar gelagerte Verschiebeplatte 9 enthält die vier spiralförmigen Nuten 36 bis 39, in welche die radial beabstandeten Bolzen 40, 41 des jeweiligen Trägers 24 bis 27 eingreifen bzw. durch welche die Bolzen hindurchgreifen. Die den Richtkanal 20 einschließenden Richrollen 32 bis 35 sind hier gut zu erkennen. Die vor der Zeichenebene befindliche Führungsplatte weist wenigstens einen in den Bereich der Verschiebeplatte 9 sich erstreckenden Stellstift 58 auf. Die Verschiebeplatte 9 besitzt eine in Umfangsrichtung verlaufende Stellnut 60 mit als Ausbuchtungen ausgebildeten Raststellen 62. Beim Schwenken der Verschiebeplatte 9 in Richtung des Pfeiles 22 gelangt der Stellstift 58 in die Stellnut 60. Die Stellnut 60 und deren Raststellen 62 sind in vorteilhafter Weise derart ausgebildet, daß bei Drehung der Verschiebeplatte 9 vorgegebene Stellpositionen der Verschiebeplatte entsprechend vorgegebene Rohrdurchmesser eingenommen werden. Die Stellnuten und Raststellen sind beispielsweise derart geformt und ausgebildet, daß beim Drehen der Verschiebeplatte 9 die Träger 24 bis 27 radial in einem vorgegebenen Verstellbereich, beispielsweise für Rohrdurchmesser von 16 bis 32 mm in vorgegebenen Schritten radial verschoben und fest eingestellt werden. Zweckmäßig sind über den Umfang verteilt vier derartige Stellstifte 58 mit zugeordneten Stellnuten vorgesehen, wobei hier der Einfachheit halber nur eine einzige Stellnut 60 dargestellt ist. Zusätzlich oder alternativ können zur Vorgabe definierter Drehwinkelstellungen der Verschiebeplatte 9 und somit definierter Anstellungen der Richtrollen 32 bis 35 auch wenigstens eine der spiralförmigen Nuten 36 bis 39 im Bereich ihrer Seitenflächen entsprechende Einkerbungen 64, 65 als Raststellen aufweisen, in welche die Bolzen 40, 41 in somit vorgegebenen Winkelstellungen der Verstellplatte 9 einrasten.

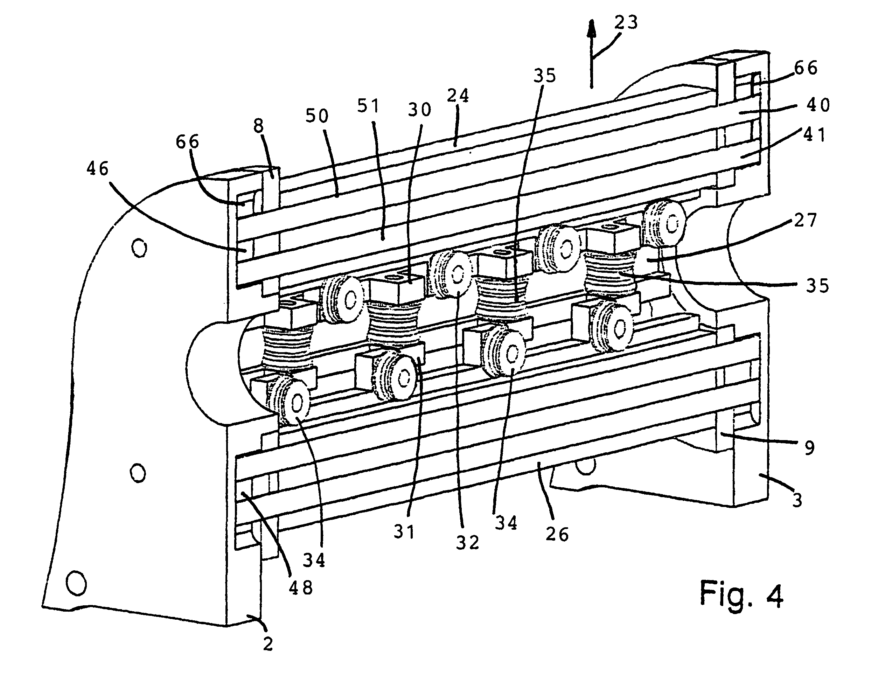

Fig. 4 zeigt in einer axialen Schnittebene und perspektivisch die Biegemaschine mit den beiden Führungsplatten 2, 3 mit den radialen Führungsnuten 46, 48 für die Bolzen 40, 41 für die beiden hier dargestellten diametral angeordneten Träger 24, 26. Die vier äquidistant angeordneten Richtrollen 35 des Trägers 37 und die dazugehörenden Lagerböcke 30, 31 der jeweiligen Richtrolle 35 sind hier gut zu erkennen. Die Stangen 50, 51 greifen mit ihren Enden, welche die genannten Bolzen 40, 41 bilden in die radialen Führungsnuten 46 ein. Die Träger 24, 26 sind in der radial am nächsten zur Längsachse einstellbaren Position dargestellt. Entsprechend dem radial über der Stange 50 bzw. deren Bolzen 40 liegenden freien Teil der Führungsnut 46 kann der Träger 24 und entsprechend können auch die anderen Träger durch Drehen der Verschiebeplatten 8, 9 in radialer Richtung entsprechend dem Pfeil 23 nach außen bzw. nach innen verschoben werden.

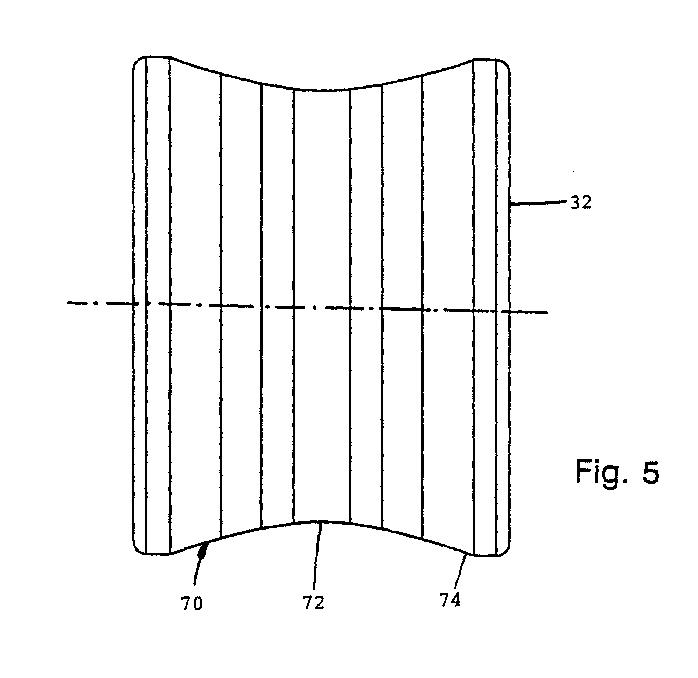

Fig. 5 zeigt eine Ansicht der Richtrolle 32, deren Außenfläche 70 eine vorgegebene Krümmung derart aufweist, daß die Verwendung für unterschiedliche Durchmesser der zu richtenden Rohre gewährleistet ist. Hierzu ist die Außenfläche 70 in der Mitte 72 der Richtrolle 32 an den Radius des kleinsten Rohrdurchmessers angepaßt. Zu den axialen Endbereichen der Rolle 32 ist der Rollendurchmesser vergrößert bis hin zum Randbereich 74 für den auf den größstmöglichen Rohrdurchmesser angepaßten Betrag.

Zum Geradebiegen eines Körpers oder Rohres wird wie folgt vorgegangen. Zunächst wird die Biegemaschine auf den gewünschten Durchmesser eingestellt, und zwar durch Schwenken der Verschiebeplatten 8, 9 mittels des Einstellgriffes 12 bis gemäß Fig. 1 die dem gewünschten Durchmesser zugeordnete Markierung 18 mit der Einstellmarke 16 korrespondiert. Hierbei rastet ferner der Stellstift 58 in die zugeordnete Raststelle 62 ein und/oder der oder die Bolzen 40, 41 rasten in die jeweiligen Einkerbungen 64, 65 der spiralförmigen Nut 36 ein, wie es oben anhand von Fig. 3 erläutert ist. Das von einer Rolle abgewickelte oder sonstwie verbogene Rohr wird durch die Öffnung 42 in den Richtkanal, eingeschoben und manuell durchgeschoben, bis es geradegerichtet durch die andere Öffnung 43 heraustritt.

### Bezugszeichen

- 2, 3: Führungsplatte
- 4, 5: Stange
- 6: Fußende
- 8, 9: Verschiebeplatte 10
- 10: Längsachse
- 12: Einstellgriff
- 14, 15: Nocke
- 16: Einstellmarke
- 18: Markierung
- 20: Richtkanal
- 22, 23: Pfeil
- 24 - 27: Träger
- 28 - 31: Lagerbock
- 32 - 35: Richtrolle
- 36 - 39: erstes Verstellelement / spiralförmige Nut
- 40, 41: zweites Verstellelement / Bolzen
- 42, 43: Öffnung
- 44, 45: Ansatz von 2, 3
- 46 - 49: radiale Führungsnut
- 50, 51: Stange
- 52: Schneideinrichtung
- 54, 55: Schneidrolle
- 56: strichpunktierte Linie / Spindel
- 58: Stellstift
- 60: Stellnut
- 62: Raststelle
- 64, 65: Einkerbung / Raststelle in 36
- 66: Teilbereich von 46

## Patentansprüche

1. Biegemaschine zum Richten eines langgestreckten Körpers, insbesondere eines Rohres, eines Verbundrohres oder einer Stange, enthaltend ein Maschinengestell (2, 3) und in diesem eine Anzahl von Richtrollen (32 - 35), welche entlang eines Richtkanals (20) und in Richtung einer Längsachse (10) sowie in Umfangsrichtung versetzt zueinander auf Trägern (24 - 27) angeordnet und radial verstellbar sind, wobei der Körper durch den Richtkanal (20) bewegbar ist,
**dadurch gekennzeichnet, daß** die Träger (24 - 27) in wenigstens einer um die Längsachse (10) des Richtkanals (20) drehbaren Verschiebeplatte (8, 9) geführt sind
und daß die Verschiebeplatte (8, 9) erste Verstellelemente (36 - 39) enthält, mit welchen zweite Verstellelemente (40, 41) der Träger (24 - 27) in Eingriff sind
und daß durch Drehen der Verschiebeplatte (8, 9) der radiale Abstand der Richtrollen (32 - 35) zur Längsachse (10) veränderbar ist.

2. Biegemaschine nach Anspruch 1, **dadurch gekennzeichnet, daß** die ersten Verstellelemente (36 - 39) als spiralförmige Nuten ausgebildet sind und daß die zweiten Verstellelemente (40, 41) als in die spiralförmigen Nuten eingreifende Bolzen ausgebildet sind oder umgekehrt.

3. Biegemaschine nach Anspruch 1 oder 2, **dadurch gekennzeichnet, daß** das Maschinengestell zwei axial beabstandet angeordnete Führungsplatten (2, 3) aufweist und/oder daß das Maschinengestell oder die Führungsplatten (2, 3) Öffnungen (42, 43) zum Durchführen des gerichteten Körpers aufweisen.

4. Biegemaschine nach einem der Ansprüche 1 bis 3, **dadurch gekennzeichnet, daß** die Träger (24 - 27) axial zwischen den beiden axial beabstandeten Verschiebeplatten (8, 9) angeordnet sind und/oder daß die Verschiebeplatten (8, 9) axial zwischen den beabstandet angeordneten Führungsplatten (2, 3) des Maschinengestells angeordnet sind.

5. Biegemaschine nach einem der Ansprüche 1 bis 4, **dadurch gekennzeichnet, daß** die Verschiebeplatten (8, 9) mittels eines Einstellgriffes (12) miteinander verbunden sind.

6. Biegemaschine nach einem der Ansprüche 1 bis 5, **dadurch gekennzeichnet, daß** das Maschinengestell und/oder die Führungsplatten (2, 3) wenigstens einen axialen Ansatz (44, 45) aufweisen, auf dessen Außenfläche die Verschiebeplatte (8, 9) drehbar gelagert ist, und/oder daß das Maschinengestell und/oder die Führungsplatten (2, 3) zur Längsachse (10) koaxiale Führungs- oder Lagerflächen für die Verschiebeplatte 8, 9 aufweisen.

7. Biegemaschine nach einem der Ansprüche 1 bis 6, **dadurch gekennzeichnet, daß** das Maschinengestell und/oder die Führungsplatten (2, 3) im wesentlichen radial ausgerichtete Führungsnuten (46 - 49) zur radialen Führung der Träger (24 - 27) enthalten und/oder daß in die Führungsnuten (46 - 49) Führungskörper (40, 41) der jeweiligen Träger (24) eingreifen und/oder daß die genannten Führungskörper als im wesentlichen axial ausgerichtete Bolzen (40, 41) ausgebildet sind.

8. Biegemaschine nach einem der Ansprüche 1 bis 7, **dadurch gekennzeichnet, daß** die Träger (24 - 27) jeweils von wenigstens einer Stange (50, 51) axial durchdrungen werden und/oder daß die freien, aus den Trägern (24 - 27) herausragenden Enden der Stangen (50, 51) die genannten Bolzen (40, 41) bilden und/oder daß die freien Enden der Stangen (50, 51) in die spiralförmige Nut (36 - 39) eingreifen und bevorzugt ferner in die dem jeweiligen Träger (24 - 27) zugeordnete radiale Führungsnut (46) der Führungsplatte (2, 3) eingreifen.

9. Biegemaschine nach einem der Ansprüche 1 bis 8, **dadurch gekennzeichnet, daß** eine Schneideinrichtung (52) mit wenigstens zwei Schneidrollen (54, 55) vorgesehen ist und/oder daß die Schneideinrichtung (52) mit den Schneidrollen (54, 55) auf zwei der diametral angeordneten Träger (24 - 27) angeordnet is.

10. Biegemaschine nach einem der Ansprüche 1 bis 9, **dadurch gekennzeichnet, daß** die Richtrollen (32 - 34) jeweils zwischen zwei Lagerböcken (28 - 31) des zugeordenten Trägers (24 - 27) angeordnet und drehbar gelagert ist.

## Claims

1. Bending machine for straightening an elongate body, in particular a tube, a composite tube or a rod, comprising a machine frame (2, 3) and a plurality of straightening rollers (32 to 35) disposed in said frame, said rollers being arranged mutually offset on supports (24 to 27) along a straightening channel (20) and in the direction of a longitudinal axis (10) and in the circumferential direction, and said straightening rollers being radially adjustable such that the body can be moved through the straightening channel (20), **characterised in that** the supports (24 to 27) are guided in at least one displacement plate (8, 9) which can be rotated about the longitudinal axis (10) of the straightening channel (20), and **in that** the displacement plate (8, 9) comprises first adjustment elements (36 to 39) with which second adjustment elements (40, 41) of the supports (24 to 27) engage, and **in that** the radial distance of the straightening rollers (32 to 35) relative to the longitudinal axis (10) can be changed by rotating the displacement plate (8, 9).

2. Bending machine according to claim 1, **characterised in that** the first adjustment elements (36 to 39) are constructed as spiral grooves and the second adjustment elements (40, 41) are constructed as shafts which engage in the spiral grooves, or vice versa.

3. Bending machine according to claim 1 or 2, **characterised in that** the machine frame comprises two guide plates (2, 3) spaced at an axial distance from one another and/or that the machine frame or the guide plates (2, 3) comprise openings (42, 43) through which the straightened body is passed.

4. Bending machine according to any of claims 1 to 3, **characterised in that** the supports (24 to 27) are axially arranged between the two axially spaced displacement plates (8, 9) and/or that the displacement plates (8, 9) are axially arranged between the guide plates (2, 3) of the machine frame arranged at a distance from one another.

5. Bending machine according to any of claims 1 to 4, **characterised in that** the displacement plates (8, 9) are connected to one another by an adjustment handle (12).

6. Bending machine according to any of claims 1 to 5, **characterised in that** the machine frame and/or the guide plates (2, 3) have at least one axial projection (44, 45), on the outer face of which the displacement plate (8, 9) is rotatably mounted and/or that the machine frame and/or the guide plates (2, 3) have guide or bearing faces coaxial to the longitudinal axis (10) for the displacement plate (8, 9).

7. Bending machine according to any of claims 1 to 6, **characterised in that** the machine frame and/or the guide plates (2, 3) have substantially radially aligned guide grooves (46 to 49) for radially guiding the supports (24 to 27) and/or that guide bodies (40, 41) of respective supports (24) engage in the guide grooves (46 to 49) and/or that said guide bodies are constructed as substantially axially aligned shafts (40, 41).

8. Bending machine according to any of claims 1 to 7, **characterised in that** each of the respective supports (24 to 27) is axially penetrated by at least one rod (50, 51) and/or that the free ends of the rods (50, 51) projecting from the supports (24 to 27) form said shafts (40, 41) and/or that the free ends of the rods (50, 51) engage in the spiral groove (36 to 39) and preferably furthermore engage in the radial guide groove (46) in the guide plate (2, 3) associated with the respective support (24, 27).

9. Bending machine according to any of claims 1 to 8, **characterised in that** a cutting device (52) comprising at least two cutting rollers (54, 55) is provided and/or that the cutting device (52) comprising the cutting rollers (54, 55) is arranged on two of the diametrically opposed supports (24 to 27).

10. Bending machine according to any of claims 1 to 9, **characterised in that** the straightening rollers (32 to 34) are respectively arranged between two bearing blocks (28 to 31) of the associated support (24 to 27) and are rotatably mounted.

## Revendications

1. Machine de redressage pour redresser un corps allongé, en particulier un tuyau, un tuyau composite ou une tige, comprenant un bâti de machine (2, 3) et, dans celui-ci, une pluralité de rouleaux de redressage (32 - 35) qui sont placés décalés les uns par rapport aux autres sur des supports (24 - 27) le long d'un canal de redressage (20) et dans la direction d'un axe longitudinal (10) ainsi que dans la direction circonférentielle, le corps étant mobile à travers le canal de redressage (20),
***caractérisée en ce que*** les supports (24 - 27) sont guidés dans au moins une plaque de déplacement (8, 9) pouvant tourner autour de l'axe longitudinal (10) du canal de redressage (20),
et ***en ce que*** la plaque de déplacement (8, 9) comprend des premiers éléments de déplacement (36 - 39) avec lesquels des deuxièmes éléments de déplacement (40, 41) des supports (24 - 27) sont en prise,
et ***en ce que,*** par rotation de la plaque de déplacement (8, 9), la distance radiale entre les rouleaux de redressage (32 - 35) et l'axe longitudinal (10) peut être modifiée.

2. Machine de redressage selon la revendication 1, ***caractérisée en ce que*** les premiers éléments de déplacement (36 - 39) sont conformés en rainures en spirale et ***en ce que*** les deuxièmes éléments de déplacement (40, 41) sont conformés en goujons s'engageant dans les rainures en spirale, ou inversement.

3. Machine de redressage selon la revendication 1 ou 2, ***caractérisée en ce que*** le bâti de machine présente deux plaques de guidage (2, 3) espacées axialement et/ou ***en ce que*** le bâti de machine ou les plaques de guidage (2, 3) présentent des ouvertures (42, 43) pour le passage du corps redressé.

4. Machine de redressage selon l'une quelconque des revendications 1 à 3, ***caractérisée en ce que*** les supports (24 - 27) sont placés axialement entre les deux plaques de déplacement (8, 9) espacées axialement et/ou ***en ce que*** les plaques de déplacement (8, 9) sont placées axialement entre les plaques de guidage (2, 3) espacées du bâti de machine.

5. Machine de redressage selon l'une quelconque des revendications 1 à 4, ***caractérisée en ce que*** les plaques de déplacement (8, 9) sont reliées entre elles au moyen d'une poignée de réglage (12).

6. Machine de redressage selon l'une quelconque des revendications 1 à 5, ***caractérisée en ce que*** le bâti de machine et/ou les plaques de guidage (2, 3) présentent au moins un appendice axial (44, 45) sur la surface extérieure duquel les plaques de déplacement (8, 9) sont montées tournantes, et/ou ***en ce que*** le bâti de machine et/ou les plaques de guidage (2, 3) présentent des surfaces de guidage ou de soutien coaxiales à l'axe longitudinal (10) pour les plaques de déplacement (8, 9).

7. Machine de redressage selon l'une quelconque des revendications 1 à 6, ***caractérisée en ce que*** le bâti de machine et/ou les plaques de guidage (2, 3) comprennent des rainures de guidage (46 - 49) orientées pour l'essentiel radialement pour le guidage radial des supports (24 - 27), et/ou ***en ce que*** des corps de guidage (40, 41) des supports (24) respectifs s'engagent dans les rainures de guidage (46 - 49), et/ou ***en ce que*** lesdits corps de guidage sont conformés en goujons (40, 41) orientés pour l'essentiel axialement.

8. Machine de redressage selon l'une quelconque des revendications 1 à 7, ***caractérisée en ce que*** les supports (24 - 27) sont chacun traversés axialement par au moins une tige (50, 51) et/ou ***en ce que*** les extrémités libres des tiges (50, 51) dépassant des supports (24 - 27) forment lesdits goujons (40, 41), et/ou ***en ce que*** les extrémités libres des tiges (50, 51) s'engagent dans les rainures en spirale (36 - 39) et s'engagent de plus de préférence dans la rainure de guidage radiale (46) de la plaque de guidage (2, 3) associée au support (24 - 27) respectif.

9. Machine de redressage selon l'une quelconque des revendications 1 à 8, ***caractérisée en ce qu'****un* dispositif de coupe (52) avec au moins deux rouleaux de coupe (54, 55) est prévu, et/ou ***en ce que*** le dispositif de coupe (52) est placé avec les rouleaux de coupe (54, 55) sur deux des supports diamétralement opposés (24 - 27).

10. Machine de redressage selon l'une quelconque des revendications 1 à 9, ***caractérisée en ce que*** les rouleaux de redressage (32 - 34) sont chacun placés et montés rotatifs entre deux étriers supports (28 - 31) du support (24 - 27) associé.
